# EUROPEAN PATENT SPECIFICATION

(11) **EP 2 769 087 B1**
(45) Date of publication and mention of the grant of the patent: **01.08.2018**
(21) Application number: 12791228.5
(22) Date of filing: 22.10.2012
(51) Int. Cl.: F03B 13/26, F03B 17/06

(54) **APPARATUS AND METHOD FOR TIDAL ENERGY EXTRACTION AND STORAGE**
VORRICHTUNG UND VERFAHREN ZUR GEWINNUNG UND SPEICHERUNG VON GEZEITENENERGIE
APPAREIL ET PROCÉDÉ POUR L'EXTRACTION ET L'ACCUMULATION DE L'ÉNERGIE DES MARÉES

(30) Priority: 20.10.2011 GB 201118147
(43) Date of publication of application: 27.08.2014
(73) Proprietor: Angus Jamieson Consulting Limited, Inverness IV2 3QG (GB)
(72) Inventor: JAMIESON, Angus, Inverness Highland IV2 3QG (GB)
(74) Representative: Lincoln, Matthew
(86) International application number: PCT/GB2012/052621
(87) International publication number: WO 2013/057521

(56) References cited:
- WO-A1-2011/061559
- FR-A2- 2 320 430
- US-A- 326 718
- US-A1- 2006 083 618
- US-A1- 2007 110 556
- US-A1- 2009 297 347

## Description

The present invention relates to an apparatus and method for tidal energy extraction and storage, and in particular to a tidal turbine apparatus and method of use. One aspect of the invention relates to a method of temporarily storing energy from a tidal flow.

### Background to the invention

Tidal streams originate from periodic changes in gravitational attraction of the masses of water by the sun and the moon. These streams are affected by the positions of the sun, the moon, the effect of Earth's rotation and the morphology of the seabed and coastline. Energy from tidal streams is a renewable energy resource with vast potential.

Systems and methods for the extraction of energy from tidal flow streams are well-known, with a number of designs of tidal energy extraction systems having been proposed. Tidal power extraction systems can be classified as tidal stream generators or tidal barrages. Tidal stream generators transform the kinetic energy of tidal streams to move turbines, mills or other appropriate apparatus configured to be propelled by the tidal stream. Tidal barrages are dams built across tidal estuaries and benefit from the differences in water levels between high and low tides.

The benefits of utilising tidal flow streams for energy generation include the predictability and dependability of the flow stream, and the relatively high power output per unit size. Tidal stream generators can extract energy from tidal stream even at low water velocities. In addition, tidal stream generators have relatively low environmental impact on marine ecosystems compared to tidal barrages and are considerably more economic to implement.

There is great variety in tidal stream generator designs, which are broadly classified as:
- Axial turbines, which are devices with the rotation axis parallel to the tidal stream direction.
- Vertical or horizontal turbines, which are devices with the rotation axis perpendicular to the tidal stream direction.
- Flow augmented turbines, which can be of any of the types described above and include a duct or shroud that increases the flow rate through the turbine.
- Oscillating devices, which use surfaces which are propelled sideways by the tidal stream.
- Venturi effect devices, which create a pressure differential that originates a secondary flow from which energy is extracted.

Many tidal stream generators are configured to extract energy when the tidal stream flows in a predetermined direction, although bi-directional systems which utilise flow in both directions of the tidal cycle are also known. Tidal stream generators which are self-orienting to change their orientation so that the tidal stream always impinges on the generator at the same side of the device have also been proposed. However, these self-orienting systems are more complex, costly, and/or unreliable than unidirectional or bidirectional turbine arrangements.

Devices are known for extracting energy from a fluid flow. US 2007/110556 describes a pair of co-rotating fluid powered wheel and generator pairs each rotating about a single vertical axis. US 2006/083618 describes a hydraulic or pneumatic machine with tilting blades which can be used as an engine or as a pump.

One class of omnidirectional system that does not require orientation is a vertical axis tidal stream generator fitted with pivoting blades or vanes. The blades of vanes move cyclically relative the rotating components to be extended into and retracted out of the flow. This makes their construction simpler than the self-orienting directional generators and eliminates sensitivity to changes in tidal flow direction. An additional benefit of the retracting vanes is the resistance to damage from debris in the flow stream and the reduced impact on marine life, including fish and mammals, which may be injured by fixed rotating blades.

One drawback of this class of generator is their relatively low efficiency, which is below the Betz efficiency limit. This may be attributed to the preferential flow of water across the return side of the generator, where the vanes are retracted and where there is less resistance to flow. This reduces the power transfer to the drive side of the generator lowering the efficiency of the device.

A general drawback of tidal generator systems is the deployment of expensive and sensitive equipment subsea, which is expensive to install and/or maintain.

Another drawback of tidal energy extraction is that the energy may not be extracted when it is required most (i.e. during times of peak demand).

It is an aim of at least one aspect of the invention to address one or more drawbacks associated with prior art tidal energy extraction systems.

### Summary of the invention

According to a first aspect of the invention there is provided a tidal generator apparatus comprising:
a pair of co-axial contra-rotating vane assemblies configured to be disposed in a tidal flow stream with an axis of rotation arranged substantially perpendicularly to a flow direction of the tidal flow stream;
wherein each vane assembly comprises a plurality of vanes cyclically movable during rotation of the vane assembly between a first extended position, and a second retracted position;
characterised in that the first and second vane assemblies of the pair are located sufficiently close to one another in an axial direction of the apparatus such that the plurality of vanes of each vane assembly intersects a plane perpendicular to the axis of rotation of the apparatus when in their extended positions;
wherein each vane comprises a lip section or strip section configured to extend into the flow stream and encourage the vane to move from a retracted position to an extended position.

Preferably, the vanes have an extended vane height in an axial direction of the apparatus when in the first extended position, and a retracted vane height in an axial direction of the apparatus when in the second retracted position.

Preferably, the first vane assembly of the pair comprises a plurality of vanes which extend towards the second vane assembly of the pair when in their extended position. Alternatively or in addition, the second vane assembly of the pair comprises a plurality of vanes which extend towards the first vane assembly of the pair when in their extended position.

The vane assemblies may be located sufficiently close to one another in an axial direction of the apparatus that vanes in their extended position overlap in a flow direction of the tidal flow stream. The flow direction may be substantially parallel to a plane perpendicular to the axis of rotation of the apparatus.

Preferably, a plurality of vanes of a first vane assembly overlap a plurality of vanes of a second vane assembly in an axial direction of the apparatus. The first and second vane assemblies may be coaxial.

Preferably, the cyclical movement of the vanes is configured to enable vanes which intersect the same plane to pass one another in the same axial space of the apparatus. The extended vanes of a first vane assembly may occupy a first portion of the cross-sectional area of the apparatus, and the retracted vanes of the first vane assembly may occupy a second portion of the cross-sectional area of the apparatus. The extended vanes of a second vane assembly may occupy at least a part of a second portion of the cross-sectional area of the tidal generator apparatus.

Therefore according this embodiment, at least a proportion of the flow which may be directed away from the first portion of the cross-sectional area of the tidal generator to the second portion, is directed towards the extended vanes of the second vane assembly. Here, cross-sectional area is described in the context of the prevailing flow direction of the tidal stream.

Preferably, the cyclical movement of the vanes is synchronous, such that the retraction of the vanes on one assembly coincides with the extension of the vanes on the other assembly. Each vane assembly may have a drive side, located at one side of the axis of rotation, and a return side, located on the opposing side of the axis of rotation.
In other words, a drive side of a first assembly overlaps the return side of the lower assembly in an axial direction and vice versa.

Preferably the vanes are configured to pivot in a vane assembly between an extended position and a retracted position. The apparatus may comprise a hinge. The pivot axis or hinge axis may be substantially radially oriented with respect to the axis of rotation of the apparatus.

The apparatus may comprise a housing, which may be a drum, and may be centrally located in the apparatus. The housing may accommodate a generator and/or electrical components of the apparatus. Alternatively or in addition the housing may accommodate a pump. The housing may be substantially cylindrical. The housing may be fixed to one of the pair of vane assemblies, and may therefore rotate with the vane assembly.

One or both vane assemblies may comprise a stop member for a vane, and preferably comprises a plurality of stop members. Each stop member may function to limit the extension and/or pivoting of a vane. The stop member may be an abutment surface, which may be located on a vane or form a part of a vane. In one embodiment, the stop member is located on the housing. In another embodiment, the stop member is located on a rotating support.

Preferably, the stop member defines the maximum height and/or angle to which a vane extends. Preferably, the vane is configured to move to an extended position at an angle of orientation of up to 90 degrees to a rotating support. More preferably, the vane is configured to move to an extended position at an angle of between 15 degrees and 75 degrees to a rotating support. In a particular preferred configuration, the vane is configured to move to an extended position at an angle of between 30 degrees and 60 degrees to a rotating support, and most preferably at an angle of approximately 45 degrees to a rotating support.

The or each vane may comprise a main vane member formed on a first side of a pivot or hinge axis of the vane. The or each vane may comprise a vane stop member formed on a second (opposing) side of a pivot or hinge axis of the vane. The vane stop member may define a maximum angle of movement of the vane. The vane stop member may be a lip. The vane stop member may define a surface inclined to the surface of the main vane member at an angle of inclination. The angle of inclination may be up to 90 degrees. More preferably, the angle of inclination is between 15 degrees and 75 degrees. In a particular preferred configuration, the angle of inclination is between 30 degrees and 60 degrees and most preferably is approximately 45 degrees.

Preferably, the vane comprises a formation configured to retract the main vane member of the vane against the rotating support, when the vane is rotating against a flow direction of the tidal flow stream. The formation may be a part of the vane stop member.

Preferably, the vane comprises a formation configured to encourage the vane to move to an extended position, away from the rotating support, when the vane is rotating against a flow direction of the tidal flow stream. The formation may be a part of the vane stop member. There may be provided a tidal generator apparatus comprising:
a pair of contra-rotating vane assemblies configured to be disposed in a tidal flow stream with an axis of rotation arranged substantially perpendicularly to a flow direction of the tidal flow stream;
wherein each vane assembly comprises a plurality of vanes movable between a first extended position and a second retracted position during rotation of the vane assembly; and wherein the vanes of each assembly overlap axially in the tidal generator apparatus.

In other words, a plurality of vanes of a first vane assembly overlap a plurality of vanes of a second vane assembly in an axial direction of the apparatus.

Preferably the first and second vane assemblies are co-axial.

Preferably, the each vane assembly comprises a drive side and a return side.

Preferably, extended vanes of the first vane assembly occupy a portion of the cross-sectional area on a return side of the second vane assembly. The extended vanes of the second vane assembly may occupy a portion of the cross-sectional area on a return side of the first vane assembly.

There may be provided a tidal generator apparatus comprising:
a pair of contra-rotating vane assemblies configured to be disposed in a tidal flow stream with an axis of rotation arranged substantially perpendicularly to a flow direction of the tidal flow stream;
wherein each vane assembly comprises a plurality of vanes movable between a first extended position and a second retracted position during rotation of the vane assembly; wherein the extended vanes of a first vane assembly occupy a first portion of the cross-sectional area of the tidal generator, and the retracted vanes of the first vane assembly occupy a second portion of the cross-sectional area;
and wherein the extended vanes of a second vane assembly occupy at least a part of the second portion of the cross-sectional area of the tidal generator apparatus.

Therefore according the invention, at least a proportion of the flow which may be directed away from the first portion of the cross-sectional area of the tidal generator to the second portion, is directed towards the extended vanes of the second vane assembly.

Preferably, the extended vanes of the first assembly occupy a portion of the cross-sectional area occupied by the retracted vanes of the second assembly.

Preferably, the first and second vane assemblies are located less than two vane heights apart in an axial direction of the generator.

The generator apparatus may comprise a pump. The pump may be configured to pump water to an electrical generator remote from the tidal generator apparatus, which may be at surface.

According to a second aspect of the invention, there is provided a method of extracting energy from a tidal flow stream using the apparatus of the first aspect of the invention.

Embodiments of the second aspect of the invention may include one or more features of the first aspect of the invention or its embodiments, or vice versa

There may be provided a transactable energy product formed by the method of extracting energy from a tidal flow stream using the apparatus of the first aspect of the invention.

There may be provided a method of storing energy from a tidal generator, the method comprising:
providing a tidal generator in a tidal flow stream;
during a storage mode of operation, using the tidal generator to drive a winch to submerge a buoy from a first depth to a second depth lower than the first;
during an extraction mode of operation, releasing the buoy to pay out the winch and drive the tidal generator.

There is provided an apparatus configured to perform the method of of storing energy from a tidal generator, the method comprising:
providing a tidal generator in a tidal flow stream;
during a storage mode of operation, using the tidal generator to drive a winch to submerge a buoy from a first depth to a second depth lower than the first;
during an extraction mode of operation, releasing the buoy to pay out the winch and drive the tidal generator.

### Brief description of the drawings

There will now be described, by way of example only, various embodiments of the invention with reference to the drawings, of which:
Figure 1A is a schematic view of a tidal generator assembly comprising a generator apparatus and a foundation according to a first embodiment of the invention, in perspective view;
Figure 1B is an enlarged view of the tidal generator apparatus of Figure 1;
Figure 2 is a perspective view of a part of a vane assembly, as used in the embodiments of Figure 1;
Figure 3A and 3B are respectively schematic views of the generator apparatus of Figure 1 used in a shrouded installation;
Figure 4 is a schematic view of a generator apparatus of Figure 1 used in a surface generation configuration;
Figure 5 is a schematic view of a generator apparatus of Figure 1 used in an energy storage configuration;
Figure 6 is a schematic representation of a tidal generator apparatus according to an alternative embodiment of the invention;
Figures 7A and 7B are schematic views of components of a generator assembly, according to a further alternative embodiment of the invention;
Figure 8 is a side view of a generator assembly comprising the components of Figures 7A and 7B in use.

### Detailed description of preferred embodiments

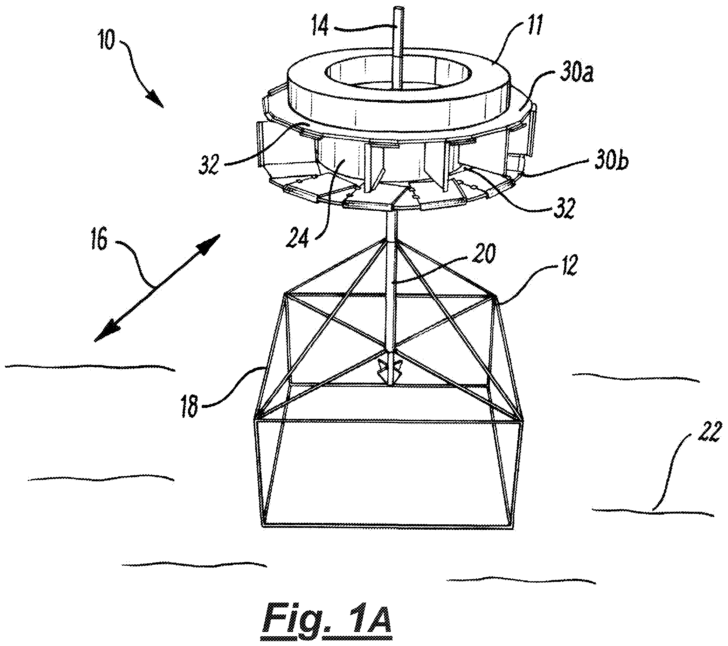

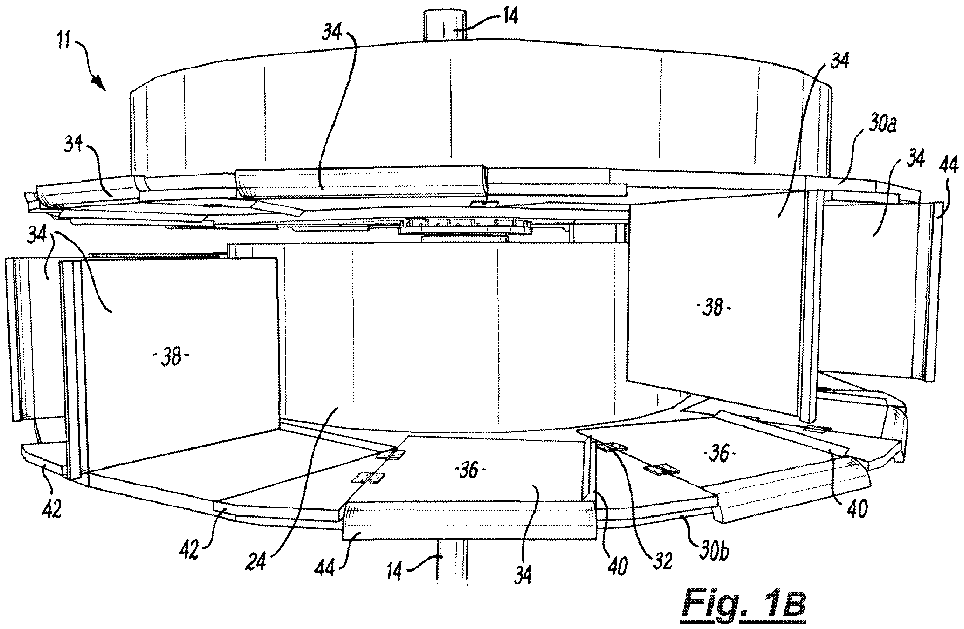

Referring firstly to Figures 1A and 1B, there is shown schematically and in perspective view a tidal generator assembly, generally depicted at 10, comprising a generator apparatus 11 mounted on a seabed foundation 12. The generator 11 is shown with its rotational axis 14 vertically oriented. Although it will be appreciated that other orientations are possible within the scope of the invention, the generator 11 is designed to have its rotational axis substantially in a perpendicular direction to the flow direction of the tidal flow stream (indicated by the arrow 16) so that the generator 11 is operative in both directions of a tidal flow stream, and the vertical orientation avoids sensitivity to the orientation of the foundation 12.

The seabed foundation 12 comprises a frame 18 formed from structural members which support an axle 20 for rotation of the tidal generator 11 on the frame. The foundation supports and secures the generator system on the seabed 22, and may utilise any suitable subsea foundation technologies known in the art.

The tidal generator 11 is of a water wheel type, and comprises a pair of contra-rotating vane assemblies 30a, 30b coaxially and concentrically mounted. The generator 11 comprises a substantially cylindrical drum 24 which surrounds the axis 14 and internal components of the generator 11. The drum 24 houses the electrical components of the generator of the system, and the cylindrical surface of the drum also provides a smooth flow surface for water of the tidal flow stream moving through the generator. In this embodiment, the drum 24 is fixed to the lower vane assembly 30b and rotates with it, although alternative configurations in which the drum 24 is fixed to the upper vane assembly 30a or in which both vane assemblies 30a, 30b rotate with respect to the drum may be used in alternative embodiments of the invention.

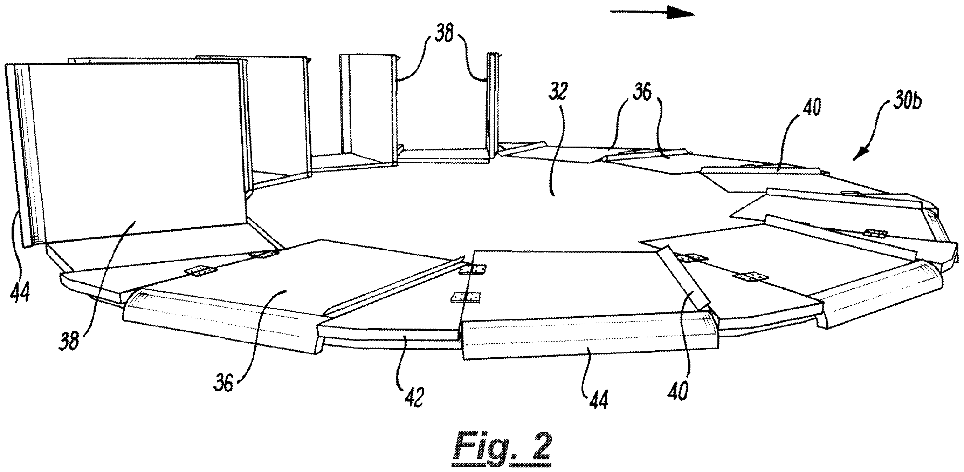

Figure 2 shows elements of the lower vane assembly 30b in more detail, with the drum 24 and central parts removed for clarity. Each vane assembly 30 comprises a rotating support 32 mounted around the axis 14, and a number of radially oriented vanes 34 distributed on the surface of the rotating support 32. The rotating supports 32 in this embodiment are substantially planar regular polygons and approximate planar discs. It will be appreciated that other shapes of rotating supports (for example, but not limited to, a circular planar disc) may be used in alternative embodiments of the invention. The vane assembles are configured with suitable mountings and bearings to the axle.

Each vane 34 comprises a substantially rigid planar member which is movable in relation to the rotating support between a retracted return position 36, and an extended drive position 38. Each vane is hingedly mounted to the rotating support at a proximal edge of the vane. A distal edge of the vane is provided with a strip 40 which extends a small distance into the flow stream to assist with lifting of the vane 34 from a retracted position to an extended position.

Intermediate planar sections 42 are provided on the rotating support to build up the rotating support between the positions of the vanes 34, so that when in their retracted positions (i.e. on the return side of the vane assembly in use) the vanes and planar sections are substantially flush and reduce water resistance during the return cycle.

Outer edges of the vanes are provided with a lip 44 which curves rearwards (in the direction of rotation of the vane assembly). This profile of the vane at the outer edge increases the torque on the vane assembly imparted by flow moving obliquely to the vane surface.

In use, the tidal flow stream impinges on the vanes 34, and rotates the vane assemblies 30. The vanes of the rotating vane assemblies 30 move cyclically between a retracted return position 36, and an extended drive position 38, depending on the position of the vane in the rotational cycle. Each vane assembly therefore has a drive side, located at one side of the central axis 14, and a return side, located on the opposing side of the rotational axis. On the drive side of the vane assembly, some (preferably all or substantially all) of the vanes are extended into the drive position, and therefore are exposed to the flow stream. On the return side, the movement of the vanes is against the flow stream direction, which causes them to pivot to their retracted position flush with their respective rotating supports. As shown in Figure 1B, in which flow direction is into the plane of the paper, the drive side of the upper vane assembly 30a is to the right of the axis 14, and the return side is to the left of the axis 14. For the lower vane assembly 30b, the drive side is to the left of the axis 14, and the return side is to the right of the axis 14.

The flow stream acts on the pair of vane assemblies to cause them to rotate in opposing directions; the upper vane assembly 30a will rotate in the anti-clockwise direction (from above), and the lower vane assembly will rotate in the clockwise direction.

The cyclical movement of the vanes is synchronous, such that the retraction of the vanes on one assembly coincides with the extension of the vanes on the other assembly. In other words, the drive side of the upper assembly overlaps the return side of the lower assembly and vice versa. This is significant as it allows the vanes of the opposing pair of assemblies to extend over the same axial space in the generator, reducing the free space through the generator which provides a preferential flow path for the tidal flow stream. This increases the efficiency of the generator compared with a conventional generator comprising a single vane assembly. In the conventional design, the return side of the vane assembly provides a preferential flow path for the tidal flow, which reduces the energy captured from the flow stream. In contrast, with the present invention the return side of one vane assembly is occupied by the drive side of the opposing vane assembly, which increases the energy captured from the flow. Electrical power generated by the system may then be transmitted via power transmission lines.

Although gaps are shown between the distal edges of the vanes and the opposing surface of the other vane assembly, it will be appreciated that it is desirable to minimise the gaps to reduce the flow path through the generator while avoiding frictional contact of the vane assemblies and/or collisions between vanes of the opposing assemblies.

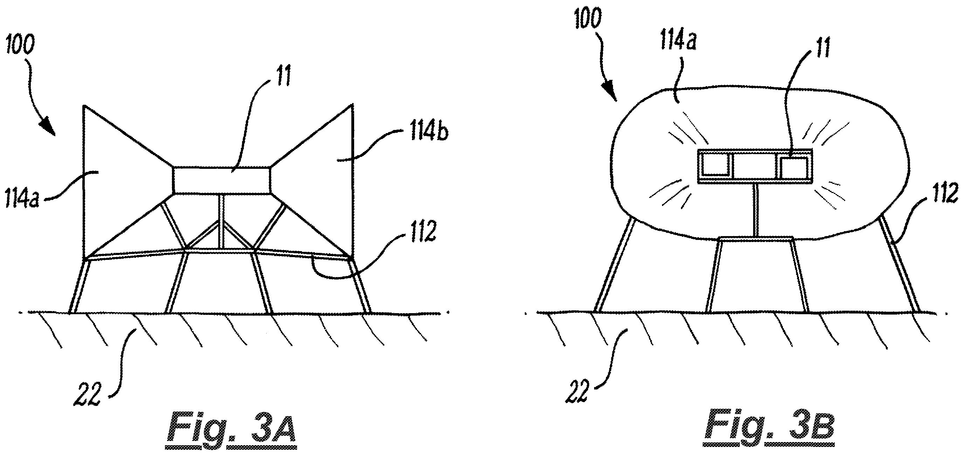

Figure 3A and Figure 3B show the tidal generator 11, as described in above, installed in a ducted installation shown generally at 100, respectively from side and front views. The installation 100 comprises the generator 11 mounted on a frame 112, which also supports funnel-like ducts 114a, 114b to concentrate the flow stream through the generator. It will be appreciated that alternative ducted, funnelled or shrouded configurations are within the scope of the invention.

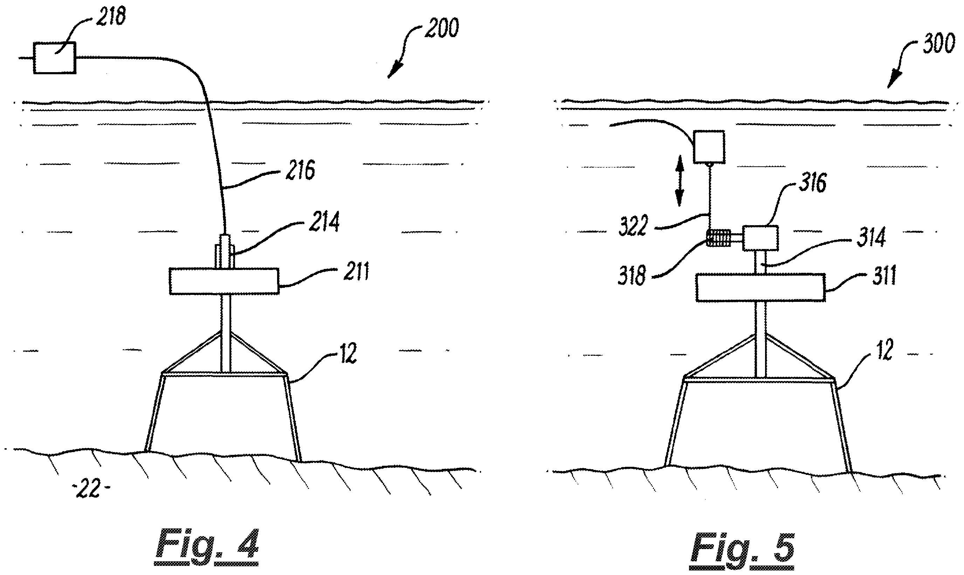

Figure 4 is a schematic view of the tidal generator 211 installed in a surface generation system, generally shown at 200. The tidal generator 211 is similar to the generator 11, and will be understood from Figures 1 and 2 and the accompanying description. However, the generator 211 differs in that instead of comprising internal generator components, it is configured to drive a rotary pump 214. The rotary pump 214 has an inlet (not shown) for seawater and an outlet to a high pressure hose 216. The rotary pump 214 is driven by the contra-rotation of the vane assemblies of the generator 211, and pumps seawater along the hose to a surface generator 218. The configuration of the contra-rotating vane assemblies as described above lends itself effectively to providing a high torque drive means for rotary pump, such as a positive displacement pump (which may be a progressive cavity pump or similar). The pressurised water pumped into the hose drives a surface turbine or other energy conversion mechanism at surface, which may be at an existing platform to which multiple tidal generators are tied back, or which may be at a near shore or onshore location. By locating the electrical generation components remotely from the tidal generator, the expense of the seabed deployed equipment is reduced and the maintenance and repair of the electrical generators is made easier and more cost effective.

In an alternatively embodiment, the rotary pump is a hydraulic pump with oil as its hydraulic fluid.

Figure 5 is a schematic view of the tidal generator 311 installed in a surface generation system, generally shown at 300. The tidal generator 311 is similar to the generator 11, and will be understood from Figures 1 and 2 and the accompanying description. However, the generator 311 differs in that in addition to its internal generator components, it is also operable in an energy storage mode. The generator includes a drive shaft 314 which is selectively coupled via a gear box 316 to a winch system 318. The winch system 318 is linked to a buoy 320 by a line 322. The winch system 318 is engaged during periods of low energy demand to pay-in the line 322 and pull the buoy towards the winch. This increases the potential energy of the buoy, and therefore provides a means for storing the energy extracted from the tidal flow until a later time. When the energy is required (for example during a peak energy demand period), the winch is released, and the positive buoyancy of the buoy causes the line to be paid out, rotating the winch system and the drive shaft to drive the internal generator components. Electrical power generated by the system may then be transmitted via power transmission lines.

Although the system may be selectively switched from storage or extraction modes, it may also be operated to utilise a portion of the energy extracted from the tidal stream during peak flow to submerge the buoy, while some of the energy is utilised to generate electricity. Release of the buoy may then be used to supplement electricity generation during periods of low power tidal flow to provide a more consistent electrical power output.

It will be appreciated that elements of the pump system of Figure 4 may be used with the storage system of Figure 5 and vice versa.

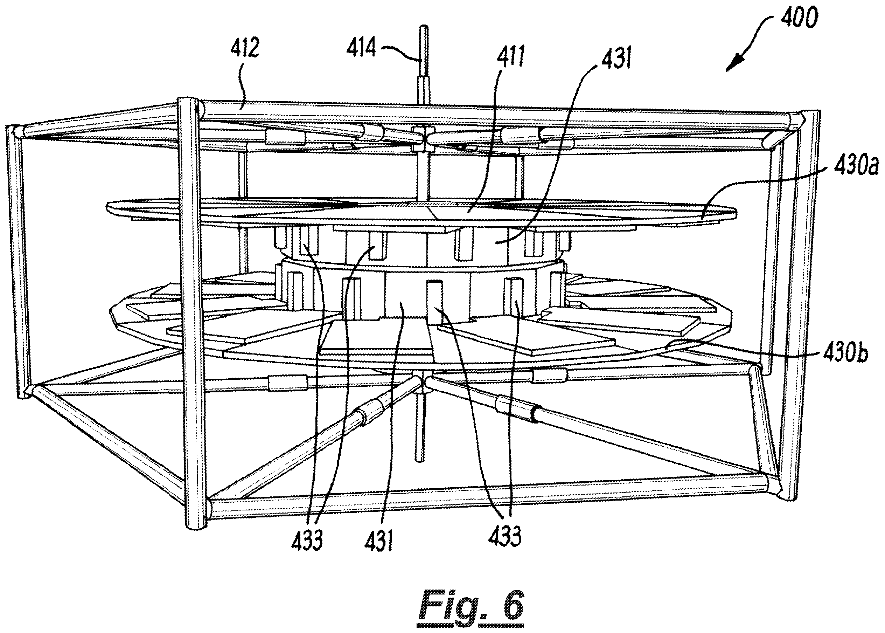

Figure 6 is a schematic view of a generator assembly according to an alternative embodiment of the invention. The generator assembly, shown generally at 400, comprises a generator apparatus 411 and a support frame 412. The generator 411 is similar to the generator 11, and will be understood from Figures 1 and 2 and the accompanying description. However, the opposing vane assemblies 430a, 430b differ in that each comprises a central drum 431 which is fixed to and rotates with a rotating support 432. The central drum 431 extends a part way along the axial length of the generator assembly, and is provided with axial stops 433 which provide abutment surfaces against which the vanes 434 rest in their extended positions. Operation of the generator 411 is the same as is as described with respect to the generator 11 of Figures 1A and 1B, and it will be appreciated that the generator 411 is operable in the configurations described in Figures 3, 4 and/or 5 and combinations thereof.

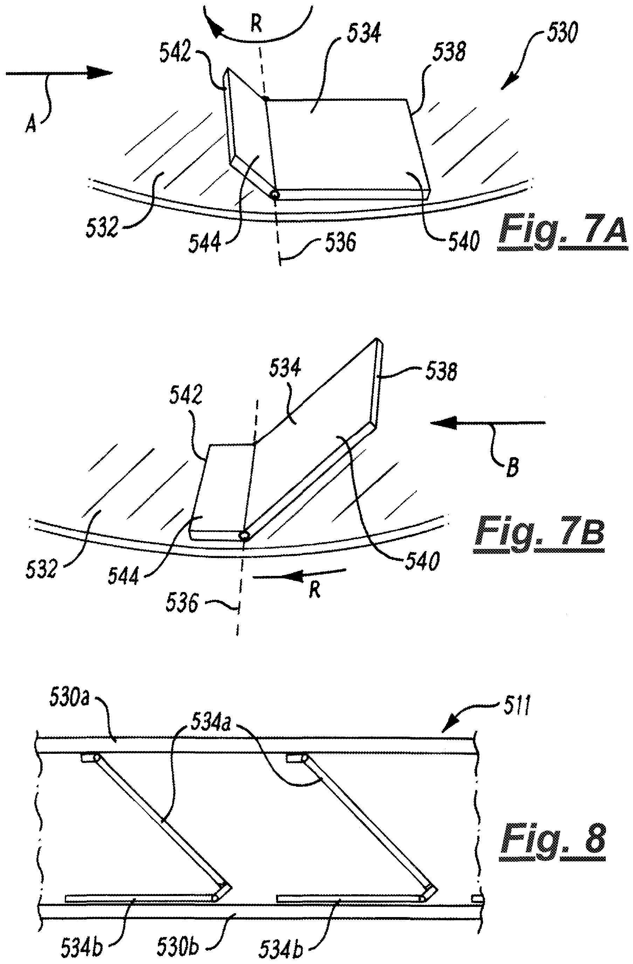

Figures 7A and 7B show schematically a component of a vane assembly according to an alternative embodiment of the invention. The vane assembly, shown generally at 530, is similar to the vane assemblies 30 and 430 of previous embodiments, and will be understood from the preceding drawings and the accompanying description. However, in this embodiment, the vane assembly differ in the details of the vanes 534 attached to the rotating support 532. As with the previously described embodiments, each vane 534 is hingedly mounted to the rotating support 532 about a hinge axis 536. As with the other embodiments, the hinge axis 536 is substantially radial in the direction of the rotating support 532. A distal edge 538 of the vane 534 is arranged to pivot about the hinge axis, away from the rotating support 532 to extend the main vane member 540 into the flow A.

An opposing edge 542 of the vane, proximal the hinge axis, is defined by a lip portion 544. The lip 544 is inclined with respect to the main vane member 540 of the vane, in this case at an angle of 135 degrees. Therefore, with the main surface of the vane retracted against the rotating support 532 as shown in Figure 7A, the surface of the lip 544 is oriented at an angle of 45 degrees to the surface of the rotating support.

In use, when the vane 534 is on the non-drive side (or return side) of an apparatus in which it is incorporated (that is, one similar to the generators 11 or 411) with the fluid flowing in the direction of the arrow A, vane is rotating in the direction R against the flow. The lip 544 is exposed to the flow and tends to retract the main vane member 538 of the vane against the rotating support 532, to encourage the vane 534 to remain substantially flat.

When the vane 534 is rotating with the flow in the direction R, on the drive side of the generator as shown in Figure 7B, the flow in the direction of arrow B creates a small pressure on the outer surface of the lip, to encourage the vane 534 to open. As the vane 534 opens and pivots about the hinge axis 536, the lip 544 rotates towards the planar surface of the rotating support 532. The angle between the inner surface of the lip 544 and the main vane member 538 defines the extent to which the vane is extended into the fluid flow. In this case, the angle is 45 degrees, and therefore the main surface of the vane is oriented in the flow at a 45 degree angle. The lip 544 abuts the surface of the rotating support 532 and acts as a shock absorber as the water is squeezed out between the inner surface of the lip 544 and the surface of the rotating support 532. This reduces the shock on the hinges during the extension of the vane into the flow.

As the vane assembly rotates and the relative flow direction reverses, the vane pivots back to a retracted position, and again the shock is absorbed as water is squeezed out between the vane and the planar surface of the rotating support.

Figure 8 is a side elevation of a part of a generator assembly, generally depicted at 511, in which a pair of vane assemblies 530a, 530b are mounted coaxially and concentrically in a contra-rotating arrangement, in the same manner as described in previous embodiments with respect to Figures 1 or 6. The upper and lower vane assemblies each comprises an arrangement of vanes 534a, 534b distributed around a rotating support 532a, 532b.

In use, the tidal flow stream impinges on the vanes 534, and rotates the vane assemblies 30 such that they move cyclically between a retracted return position (as shown by vanes 534b), and an extended drive position (as shown by vanes 534a), depending on the position of the vane in the rotational cycle. The flow stream acts on the pair of vane assemblies to cause them to rotate in opposing directions, and the cyclical movement of the vanes is synchronous, such that the retraction of the vanes on one assembly coincides with the extension of the vanes on the other assembly. It will be appreciated that the generator 411 is operable in the configurations described in Figures 3, 4 and/or 5 and combinations thereof.

The configuration of Figures 7A, 7B and 8 provides an effective means for capturing the flow and enables the vanes to open and close reliably, and pass one another easily.

The invention provides a tidal generator apparatus and method of use is described. The apparatus comprises a pair of contra-rotating vane assemblies configured to be disposed in a tidal flow stream, and having with an axis of rotation arranged substantially perpendicularly to a flow direction of the tidal flow stream. A vertical axis is preferred. Each vane assembly comprises a plurality of vanes cyclically movable during rotation of the vane assembly. The vanes move between a first extended position, and a second retracted position. First and second vane assemblies of the pair are located sufficiently close to one another in an axial direction of the apparatus such that the plurality of vanes of each vane assembly intersects a plane perpendicular to the axis of rotation of the apparatus when in their extended positions.

The invention addresses drawbacks associated with prior art tidal energy extraction systems by providing a generator apparatus with improved efficiency. This may be attributed to the utilisation of flow of water across the return side of the generator to rotate a contra-rotating vane assembly, resulting increased power transfer to drive the generator. The apparatus of various embodiments is relatively inexpensive and to install and/or maintain.

## Claims

1. A tidal generator apparatus (11, 211, 311, 411, 511) comprising:
a pair of co-axial contra-rotating vane assemblies (30, 430, 530) configured to be disposed in a tidal flow stream with an axis of rotation arranged substantially perpendicularly to a flow direction of the tidal flow stream;
wherein each vane assembly (30a, 30b, 430a, 430b, 530a, 530b) comprises a plurality of vanes (34, 434, 534) cyclically movable during rotation of the vane assembly (30a, 30b, 430a, 430b, 530a, 530b) between a first extended position (38),
and a second retracted position (36); wherein the first and second vane assemblies (30a, 30b, 430a, 430b, 530a, 530b) of the pair are located sufficiently close to one another in an axial direction of the apparatus (11, 211, 311, 411, 511) such that the plurality of vanes (34, 434, 534) of each vane assembly (30a, 30b, 430a, 430b, 530a, 530b) intersects a plane perpendicular to the axis of rotation of the apparatus when in their extended positions; **characterised in that** each vane (34, 434, 534) comprises a lip section (544) or strip section (40) configured to extend into the flow stream and encourage the vane to move from a retracted position to an extended position.

2. The apparatus (11, 211, 311, 411, 511) according to claim 1 wherein the first vane assembly (30a, 430a, 530a) of the pair comprises a plurality of vanes (34, 434, 534) which extend towards the second vane assembly (30b, 430b, 530b) of the pair when in their extended position, and wherein the second vane assembly (30b, 430b, 530b) of the pair comprises a plurality of vanes (34, 434, 534) which extend towards the first vane assembly (30a, 430a, 530a) of the pair when in their extended position.

3. The apparatus (11, 211, 311, 411, 511) according to claim 1 or claim 2 wherein at least a proportion of the flow which is directed away from extended vanes of the first vane assembly (30a, 430a, 530a) of the pair is directed towards extended vanes of the second vane assembly (30b, 430b, 530b) of the pair.

4. The apparatus (11, 211, 311, 411, 511) according to any preceding claim wherein first and second vane assemblies (30a, 30b, 430a, 430b, 530a, 530b) of the pair are located less than two extended vane heights apart in an axial direction of the apparatus.

5. The apparatus (11, 211, 311, 411, 511) according to any preceding claim wherein the cyclical movement of the vanes (34, 434, 534) is synchronous, such that the retraction of the vanes (34, 434, 534) on one assembly coincides with the extension of the vanes on the other assembly.

6. The apparatus (11, 211, 311, 411, 511) according to any preceding claim wherein the vanes (34, 434, 534) comprise a pivot axis which is substantially radially oriented with respect to the axis of rotation of the apparatus.

7. The apparatus (11, 211, 311, 411, 511) according to any preceding claim wherein the vane (34, 434, 534) is configured to move to an extended position at an angle of between 30 degrees and 60 degrees to a rotating support.

8. The apparatus (11, 211, 311, 411, 511) according to any preceding claim wherein the or each vane (534) comprises a main vane member (540) formed on a first side of a pivot or hinge axis of the vane (534), and a vane stops member formed on a second side of the pivot or hinge axis of the vane.

9. The apparatus (11, 211, 311, 411, 511) according to any preceding claim wherein a vane stop member defines a maximum angle of movement of the vane (34, 434, 534).

10. The apparatus (11, 211, 311, 411, 511) according to claim 9 wherein the lip section (544) is configured to retract the main vane member (540) of the vane against the rotating support (532), when the vane (534) is rotating against a flow direction of the tidal flow stream.

11. The apparatus (11, 211, 311,411, 511) according to claim 9 or 10 wherein the lip section (544) is configured to encourage the vane (534) to move to an extended position, away from the rotating support (532), when the vane (534) is rotating against a flow direction of the tidal flow stream.

12. The apparatus (11, 211, 311, 411, 511) according to any preceding claim wherein the apparatus comprises a pump (214).

13. The apparatus (11, 211, 311, 411, 511) according to claim 12 wherein the pump (214) is configured to pump fluid to an electrical generator remote from the tidal generator apparatus.

14. The apparatus (11, 211, 311, 411, 511) according to any preceding claim wherein the vane stop member is an abutment surface located on the vane or form part of the vane.

15. A method of extracting energy from a tidal flow stream using the apparatus (11, 211, 311, 411, 511) according to any preceding claim.

## Patentansprüche

1. Eine Gezeitenerzeugervorrichtung (11, 211, 311, 411, 511), die Folgendes umfasst:
ein Paar koaxial gegenläufiger Leitschaufelanordnungen (30, 430, 530), die so konfiguriert sind, dass sie in einem Gezeitenströmungsstrom mit einer Rotationsachse angeordnet sind, die im Wesentlichen senkrecht zu einer Strömungsrichtung des Gezeitenströmungsstroms angeordnet ist;
wobei jede Leitschaufelanordnung (30a, 30b, 430a, 430b, 530a, 530b) eine Vielzahl von Leitschaufeln (34, 434, 534) umfasst, die während der Drehung der Leitschaufelanordnung (30a, 30b, 430a, 430b, 530a, 530b) zwischen einer ersten ausgefahrenen Position (38) und einer zweiten zurückgezogenen Position (36) zyklisch bewegbar sind;
wobei die erste und die zweite Leitschaufelanordnung (30a, 30b, 430a, 430b, 530a, 530b) des Paares in einer axialen Richtung der Vorrichtung (11, 211, 311, 411, 511) ausreichend nahe beieinander angeordnet sind, dass die Vielzahl von Leitschaufeln (34, 434, 534) jeder Leitschaufelanordnung (30a, 30b, 430a, 430b, 530a, 530b) sich mit einer Ebene überschneidet, die senkrecht zur Rotationsachse der Vorrichtung ist, wenn sie sich in ihren ausgefahrenen Positionen befindet; **dadurch gekennzeichnet,**
**dass** jede Leitschaufel (34, 434, 534) einen Lippenabschnitt (544) oder
Streifenabschnitt (40) umfasst, der so konfiguriert ist, dass er sich in den Strömungsstrom erstreckt und die Leitschaufel von einer zurückgezogenen Position in eine ausgefahrene Position bewegt.

2. Die Vorrichtung (11, 211, 311, 411, 511) nach Anspruch 1, wobei die erste Leitschaufelanordnung (30a, 430a, 530a) des Paares eine Vielzahl von Leitschaufeln (34, 434, 534) umfasst, die sich zur zweiten Leitschaufelanordnung (30b, 430b, 530b) des Paares hin erstrecken, wenn sie sich in ihrer ausgefahrenen Position befinden, und wobei die zweite Leitschaufelanordnung (30b, 430b, 530b) des Paares eine Vielzahl von Leitschaufeln (34, 434, 534) umfasst, die sich zur ersten Leitschaufelanordnung (30a, 430a, 530a) des Paares hin erstrecken, wenn sie sich in ihrer ausgefahrenen Position befinden.

3. Die Vorrichtung (11, 211, 311, 411, 511) nach Anspruch 1 oder Anspruch 2, wobei mindestens ein Teil der Strömung von ausgefahrenen Leitschaufeln der ersten Leitschaufelanordnung (30a, 430a, 530a) des Paares weg und zu den ausgefahrenen Leitschaufeln der zweiten Leitschaufelanordnung (30b, 430b, 530b) des Paares hin gerichtet ist.

4. Die Vorrichtung (11, 211, 311, 411, 511) nach einem der vorhergehenden Ansprüche, wobei die erste und die zweite Leitschaufelanordnung (30a, 30b, 430a, 430b, 530a, 530b) des Paares in einer axialen Richtung der Vorrichtung weniger als zwei ausgefahrene Leitschaufelhöhen voneinander entfernt angeordnet sind.

5. Die Vorrichtung (11, 211, 311, 411, 511) nach einem der vorhergehenden Ansprüche, wobei die zyklische Bewegung der Leitschaufeln (34, 434, 534) synchron ist, sodass das Zurückziehen der Leitschaufeln (34, 434, 534) gleichzeitig mit dem Ausfahren der Leitschaufeln der anderen Anordnung erfolgt.

6. Die Vorrichtung (11, 211, 311, 411, 511) nach einem der vorhergehenden Ansprüche, wobei die Leitschaufeln (34, 434, 534) eine Schwenkachse umfassen, die im Wesentlichen radial in Bezug auf die Rotationsachse der Vorrichtung ausgerichtet ist.

7. Die Vorrichtung (11, 211, 311, 411, 511) nach einem der vorhergehenden Ansprüche, wobei die Leitschaufel (34, 434, 534) so konfiguriert ist, dass sie sich in einer ausgefahrenen Position in einem Winkel von zwischen 30 Grad und 60 Grad zu einer rotierenden Halterung bewegt.

8. Die Vorrichtung (11, 211, 311, 411, 511) nach einem der vorhergehenden Ansprüche, wobei die oder jede Leitschaufel (534) ein Hauptleitschaufelelement (540), das sich an einer ersten Seite einer Schwenk- oder Gelenkachse der Leitschaufel (534) befindet und ein Leitschaufelstoppelement, das sich auf einer zweiten Seite der Schwenk- oder Gelenkachse der Leitschaufel befindet, umfasst.

9. Die Vorrichtung (11, 211, 311, 411, 511) nach einem der vorhergehenden Ansprüche, wobei ein Leitschaufelstoppelement einen maximalen Bewegungswinkel der Leitschaufel (34, 434, 534) definiert.

10. Die Vorrichtung (11, 211, 311, 411, 511) nach Anspruch 9, wobei der Lippenabschnitt (544) so konfiguriert ist, dass er das Hauptleitschaufelelement (540) der Leitschaufel gegen die rotierende Halterung (532) zurückzieht, wenn sich die Leitschaufel (534) gegen eine Strömungsrichtung des Gezeitenströmungsstroms dreht.

11. Die Vorrichtung (11, 211, 311, 411, 511) nach Anspruch 9 oder 10, wobei der Lippenabschnitt (544) so konfiguriert ist, dass er die Leitschaufel (534) dazu bringt, sich in eine ausgefahrene Position weg von der rotierenden Halterung (532) zu bewegen, wenn sich die Leitschaufel (534) gegen eine Strömungsrichtung des Gezeitenströmungsstroms dreht.

12. Die Vorrichtung (11, 211, 311, 411, 511) nach einem der vorhergehenden Ansprüche, wobei die Vorrichtung eine Pumpe (214) umfasst.

13. Die Vorrichtung (11, 211, 311, 411, 511) nach Anspruch 12, wobei die Pumpe (214) so konfiguriert ist, dass sie Flüssigkeit zu einem elektrischen Generator pumpt, der von der Gezeitenerzeugervorrichtung entfernt ist.

14. Die Vorrichtung (11, 211, 311, 411, 511) nach einem der vorhergehenden Ansprüche, wobei das Leitschaufelstoppelement eine Anschlagfläche ist, die sich an der Leitschaufel befindet oder einen Teil der Leitschaufel bildet.

15. Ein Verfahren zur Extraktion von Energie aus einem Gezeitenströmungsstrom unter Verwendung der Vorrichtung (11, 211, 311, 411, 511) nach einem der vorhergehenden Ansprüche.

## Revendications

1. Une génératrice marémotrice (11, 211, 311, 411, 511) comprenant :
une paire d'ensembles d'aubes coaxiales contra-rotatrices (30, 430, 530) configurées pour être placées dans un écoulement de marée avec un axe de rotation pratiquement perpendiculaire à la direction de l'écoulement de la marée ;
dans laquelle chaque ensemble (30a, 30b, 430a, 430b, 530a, 530b) comprend plusieurs aubes (34, 434, 534) pouvant se déplacer de manière cyclique pendant la rotation de l'ensemble des aubes (30a, 30b, 430a, 430b, 530a, 530b) entre une première position sortie (38) et une seconde position rentrée (36) ;
dans laquelle le premier et le second ensemble des aubes (30a, 30b, 430a, 430b, 530a, 530b) de la paire sont placés suffisamment près l'un de l'autre dans la direction axiale de la génératrice (11, 211, 311, 411, 511) pour que les aubes (34, 434, 534) de chaque ensemble d'aubes (30a, 30b, 430a, 430b, 530a, 530b) recoupent un plan perpendiculaire à l'axe de rotation de la génératrice lorsqu'elles sont en position sortie ; **caractérisée par le fait que** chaque aube (34, 434, 534) comprend une section lèvre (lip) (544) ou une section bande (strip) (40) configurées pour se déployer dans l'écoulement et pour forcer l'aube à se déplacer d'une position rentrée à une position sortie.

2. La génératrice (11, 211, 311, 411, 511) conforme à la revendication 1 dans laquelle le premier ensemble des aubes (30a, 430a, 530a) de la paire comprend plusieurs aubes (34, 434, 534) se déployant dans le second ensemble des aubes (30b, 430b, 530b) de la paire, lorsqu'elles sont en position sortie, et dans laquelle le second ensemble des aubes (30b, 430b, 530b) de la paire comprend plusieurs aubes (34, 434, 534) se déployant vers le premier ensemble des aubes (30a, 430a, 530a) de la paire lorsqu'elles sont en position sortie.

3. La génératrice (11, 211, 311, 411, 511) conforme à la revendication 1 ou à la revendication 2 dans laquelle au moins une partie de l'écoulement qui s'éloigne des aubes sorties du premier ensemble d'aubes (30a, 430a, 530a) de la paire se déploie vers les aubes sorties du second ensemble des aubes (30b, 430b, 530b) de la paire.

4. La génératrice (11, 211, 311, 411, 511) conforme à l'une des revendications précédentes, dans laquelle le premier et le second ensembles des aubes (30a, 30b, 430a, 430b, 530a, 530b) de la paire sont séparés par une distance inférieure à la hauteur des deux aubes sorties dans la direction axiale de la génératrice.

5. La génératrice (11, 211, 311, 411, 511) conforme à l'une des revendications précédentes, dans laquelle le mouvement cyclique des aubes (34, 434, 534) est synchrone, afin que la rentrée des aubes (34, 434, 534) sur un ensemble coïncide avec la sortie des aubes sur l'autre ensemble.

6. La génératrice (11, 211, 311, 411, 511) conforme à l'une des revendications précédentes, dans laquelle les aubes (34, 434, 534) comprennent un axe de pivotation orienté radialement par rapport à l'axe de rotation de la génératrice.

7. La génératrice (11, 211, 311, 411, 511) conforme à l'une des revendications précédentes, dans laquelle les aubes (34, 434, 534) sont configurées pour se déplacer en position sortie suivant un angle compris entre 30 degrés et 60 degrés par rapport au support rotatif.

8. La génératrice (11, 211, 311, 411, 511) conforme à l'une des revendications précédentes, dans laquelle l'aube ou chaque aube (534) comprend un organe principal (540) formé sur un premier côté d'un pivot ou axe de rotation de l'aube (534), et un organe de butée d'aube formé sur un second côté du pivot ou de l'axe de rotation de l'aube.

9. La génératrice (11, 211, 311, 411, 511) conforme à l'une des revendications précédentes, dans laquelle un organe de butée d'aube définit un angle maximum de déplacement de l'aube (34, 434, 534).

10. La génératrice (11, 211, 311, 411, 511) conforme à la revendication 9, dans laquelle la section lèvre (lip) (544) est configurée pour faire rentrer l'organe principal (540) de l'aube contre le support rotatif (532), lorsque l'aube (534) tourne sous l'effet de la direction de l'écoulement de la marée.

11. La génératrice (11, 211, 311, 411, 511) conforme à la revendication 9 ou 10, dans laquelle la section lèvre (lip) (544) est configurée pour déplacer l'aube (534) sur une position sortie, loin du support rotatif (532), lorsque l'aube (534) tourne sous l'effet de la direction de l'écoulement de la marée.

12. La génératrice (11, 211, 311, 411, 511) conforme à l'une des revendications précédentes, dans laquelle la génératrice comprend une pompe (214).

13. La génératrice (11, 211, 311, 411, 511) conforme à la revendication 12, dans laquelle la pompe (214) est configurée pour pomper le fluide dans une génératrice électrique éloignée de la génératrice marémotrice.

14. La génératrice (11, 211, 311, 411, 511) conforme à l'une des revendications précédentes, dans laquelle l'organe de butée d'aube est une surface de butée placée sur l'aube ou faisant partie de l'aube.

15. Une méthode pour extraire de l'énergie de l'écoulement de la marée en utilisant la génératrice (11, 211, 311, 411, 511) conforme à l'une des revendications précédentes.
